Europäisches Patentamt

European Patent Office

Office européen des brevets

(19)

(11) EP 1 727 052 A1

(12) EUROPEAN PATENT APPLICATION

(43) Date of publication:
29.11.2006 Bulletin 2006/48

(51) Int Cl.:
G06F 17/21 (2006.01)    G06F 17/27 (2006.01)

(21) Application number: 06386011.8

(22) Date of filing: 16.05.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 27.05.2005 GR 2005100259

(71) Applicant: Gerou, George
114 73 Athens (GR)

(72) Inventor: Gerou, George
114 73 Athens (GR)

(54) **Conceptual apportionment and ordering in columns of the written speech for more understandable and faster-readable texts**

(57)    Production of printed or otherwise produced easier comprehensible and faster readable texts in the mode of columnar notional arrangement, in which the texts are written in columns and consecutive lines in these columns comprise sets of consecutive words, wherein phrases of the original text have been apportioned so as to constitute partial or self-sufficient notional entities and wherein these lines have their beginnings or their ends lying along a straight line perpendicular to the common direction thereof or wherein these lines have their geometrical means lying along a straight line normally oriented to the direction thereof, such straight lines passing through the geometrical means constituting an axis of symmetry being followed by the reader's eyes after a certain habituation, thereby achieving a more efficient, faster and more relaxed reading, as well as of texts in which the differentiated writing of selected words renders a selected summary.

## CONVERTING ELECTRIC ENERGY INTO THERMAL ENERGY

All conductors heat up when
an electric current passes through them.
When a common light bulbis switched on
for an extended period of time,
it heats up.
When we turn on a kitchen stove,
its hotplate heats up.
Heaters, stoves and water-heaters heat up
when an electric current passes
through the resistance they contain.
In general, when an electric current
passes through an resistance ,
its temperature rises.
This phenomenon was first studied
by the English physicist, James Joule
and that is why it is called "Joule's law".
As we saw in the book of physics,
an increase in the element's temperature
means an increase in its thermal energy.
If the resistance i
s in an environment
with a lower temperature,
heat from the resistance
will be radiated to that environment.
Where does this heat come from?
We know that heat is a form of energy
which is transferred
from one body to another
due to the difference in temperature.
We also know that energy
is not generated from nil.
It can only be converted
from one form into another,
so that its total amount remains unaltered.
However, empirical evidence suggests
that when an electric current passes
through an resistance,
its thermal energy increases.
Therefore, we must accept that
this thermal energy comes
from the electric current

**FIGURE 1 b**

## Description

The proposal entitled "CONCEPTUAL APPORTIONMENT AND ORDERING IN COLUMNS OF THE WRITTEN SPEECH FOR EASIER COMPREHENSIBLE AND FASTEN READABLE TEXTS" concerns a method of producing easier comprehensible and faster readable texts, whereby each phrase of the text is split ín sets comprising of one or more consecutive words. The sets of words constitute in, themselves self-sufficing or partial notional entities such as clauses, the subject of a clause wíth the adjectival complernents, the object of a clause with the adjectival complernents, the verb with one or more adverbs. Thereof, individual words that must be emphasized are the said sets of words being in consecutive lines of the text in the order in which they appear in the phrase out of which they originated and in the order by which they are being read. The said sets of words thereby form columns and the corresponding texts of this method are produced means of any kind of equipment whatsoever , such as printing devices, electronic devices, projector devices, etc.

The applied today printing portrays the corresponding writing of handwriting, according to which the words of the text are placed in straight lines and in order the next word is always placed on the right of the previous word. By this manner, lines of words are created, which start from the left margin of the page and end at the relevant right margin. The texts produced by today's applied method, which we will herein refer to as the traditional writing, have the following disadvantages:

1.- It is tiring on the eyes to read these texts: a) The muscles in the reader's eyeballs are heavily strained, because the eyeballs are compelled to read word by word over a large angle from left to right, beginning with the middleofthe first word and finishing by focusing on the middle of the last word in that line. As soon as the reader has finished with that line, his eyeballs must turn back over the same large angle to return to the left and search for the middle of the first word of the next line. This is exhausting for the eyes because the same procedure is repeated many times.

b) These texts contain long lines in which the distance of the words from the eyes increases, as these words are located further from the center of the line. In order to be able to read these words, the lenses of the reader's eyes adjust to each word and this results in a great amount of stress being placed upon the corresponding eye muscles.

c) The reader's eyes also tire because they must cover a great distance in order to read the words left to right, using their largest dimension, i.e. their length, and so the reader covers approximately twice the length of all the lines in the text.

II. The reader's brain is especially strained because it must, very quickly, send commands to the eyeballs to read word by word and to return to the beginning of each line, and to the lenses of the eyes in order to adjust to the constantly changing distances of the words.

III. The reader's comprehension of the text is reduced, because the brain is too busy sending the abovementioned commands quickly to each muscle group of the eyes, to fully devote itself to perceiving the text. Therefore, if perception is deficient, it is much more difficult for the reader to comprehend texts. IV. The texts are read at a very low speed, because, as outlined above, the reader has to look over a great distance to read .

the text and then to return to the beginning of the next line, whilst skimming over the length of the words from left to right.

V. The reader is not assisted in his attempt to comprehend the meaning of the various phrases, because the phrases in the text are not divided into partial or complete concepts, as they are in the proposed script.

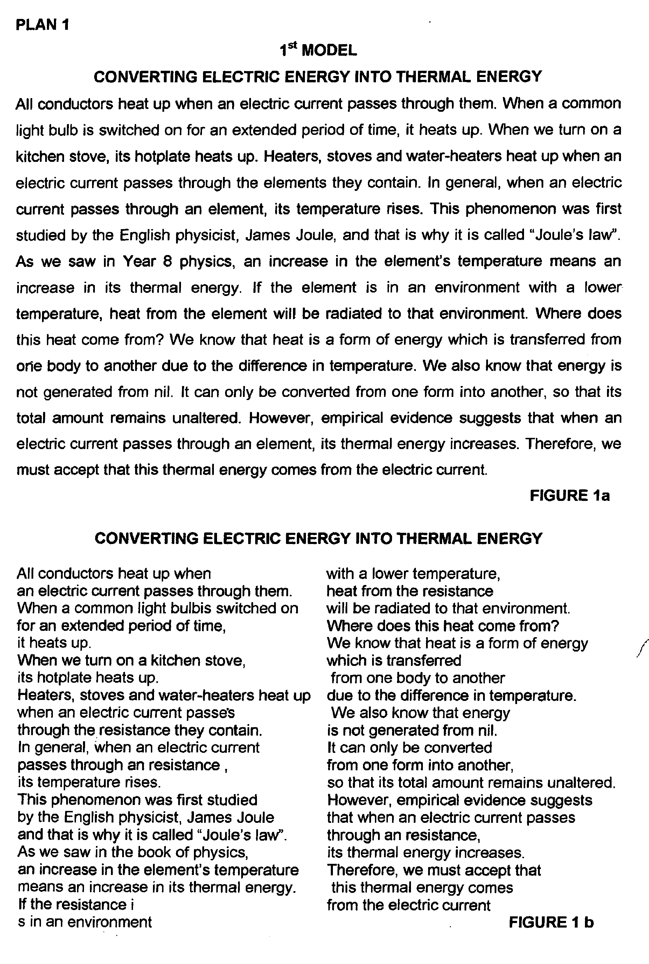

The proposal outlined herein offers a successful way of producing texts with the help of printing systems or other methods of producing and presenting text. In these texts, the phrases of traditional texts, such as the 1st model in figure 1 a of plan 1, have been divided into successive groups of continuous words. These groups make up the lines of new texts and these lines are arranged in line in the order in which they were divided, that is, one line beneath the previous (figure 1b in plan 1). These lines are read by starting at the first word on the left of the first line towards the right to the end of that line and continuing in the same fashion onto the other lines in the column. Similarly, in the 2nd model in plan 3, the text of plan 4 has been arranged into columns and all the lines in each column begin at the same point, forming a vertical line in that column and a similar text in plan 5, in which all the lines end at the same point, also forming a vertical line in the column. Again, in the 2nd model, the texts of plan 6 and 7 have been arranged into columns, whereby the middle of the lines in each column form a straight vertical line in that column, these vertical line is also an axis of symmetry of the column. These lines are also read in the same order that they can be found in the phrases to which they

belonged prior to being divided. The number of columns in each page depends on many factors, such as:

The desired width of the page

1. The desired width of the page
2. The size of the letters to be used.
3. The nature of the printed material, e.g. whether it' is a school textbook and for which educational level it is designed etc.

4. Whether the text is illustrated.

5. Whether we are interested in the brightness of the text, as well as other factors.

The method of producing this kind of texts characterized in that the texts are arranged in a columnar notional mode comprising apportionment of the phases contained in the original text in sets comprising one or more consecutive words, said sets of words constituting in themselves self-sufficient or partial notional entities, such as small clauses, the subject of a clause with one or more adjectival complements, the object of a clause with one or more adjectival complements, the verb with one or more adverbs thereof, individual words that must be emphasized, said sets of words being contained in consecutive lines of text in the order in which they appear in the phrase out of which they originated and in which order they are being read.

Each such set may comprise of the subject with its adjective, the verb with its adverbs, the verb with its object, the verb with its subject and object, single words, when they express something which must be stressed, as well as anything else the writer believes is necessary to the text. **Groups of words, such as**

**All conductors heat up when**
**an electric current**
**passes through them.**
**When we turn on a kitchen stove,**
**its hotplate heats up.**
**In general, when an electric current passes through**
**an**
**resistance ,**
**its temperature rises.**

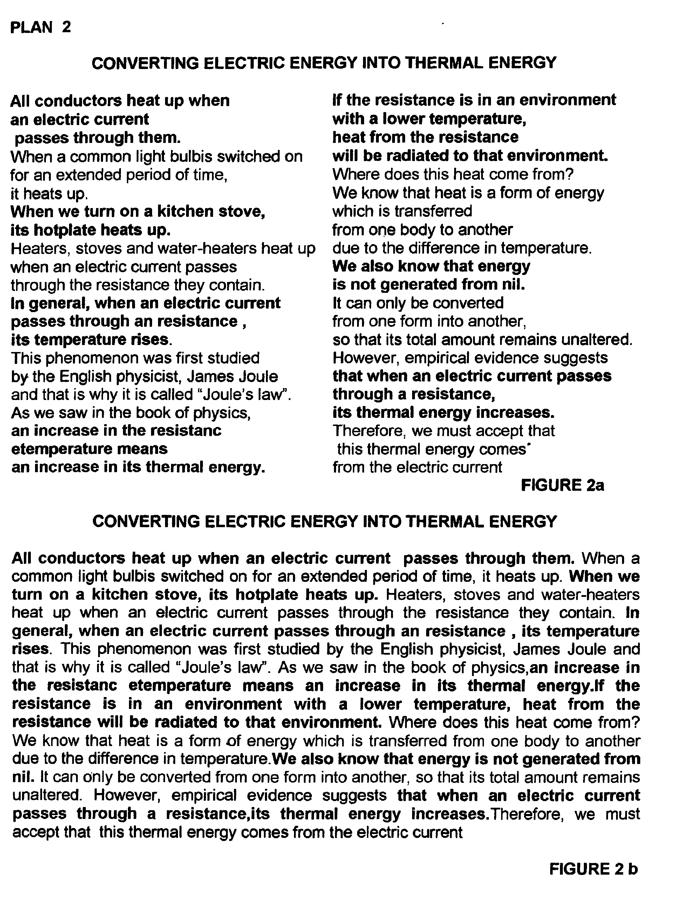

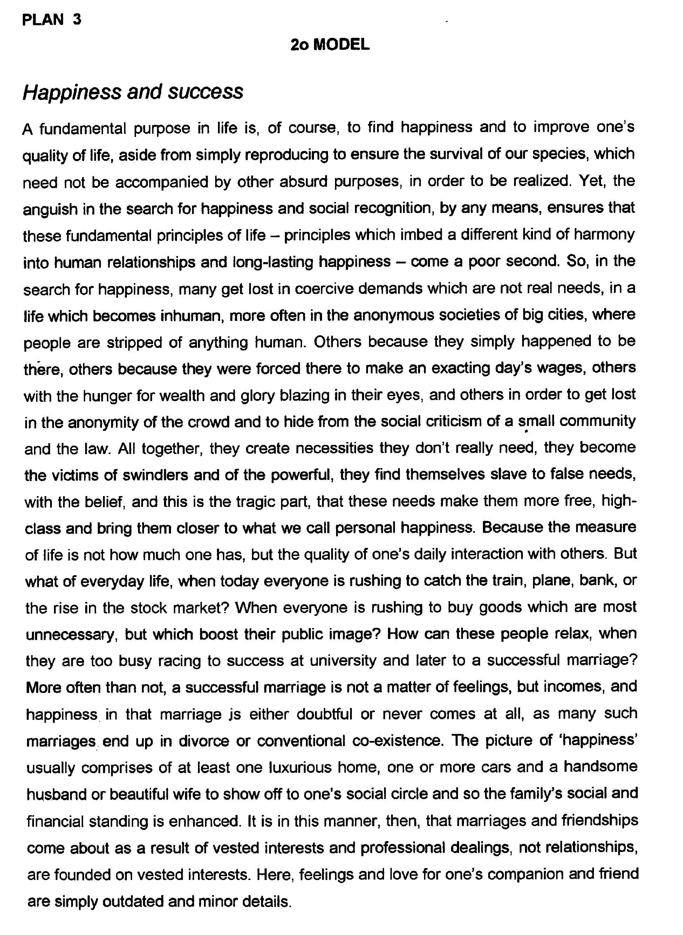

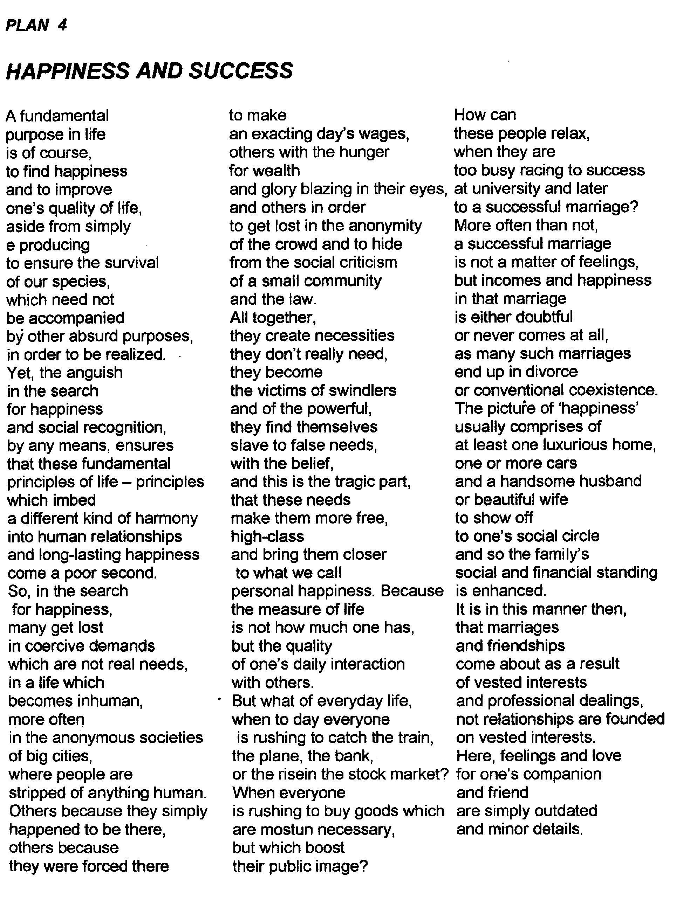

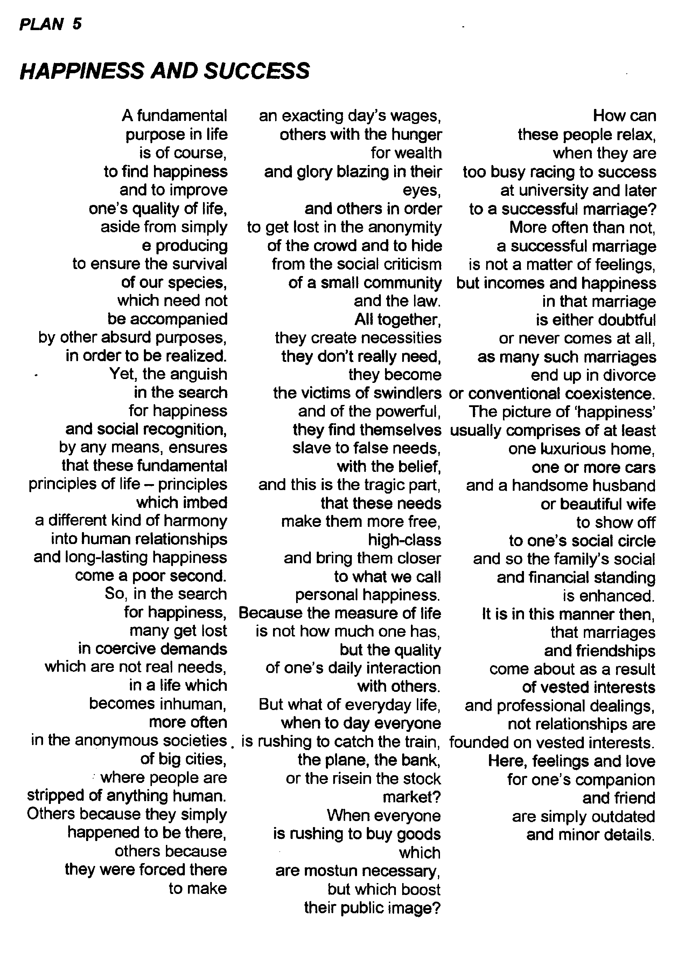

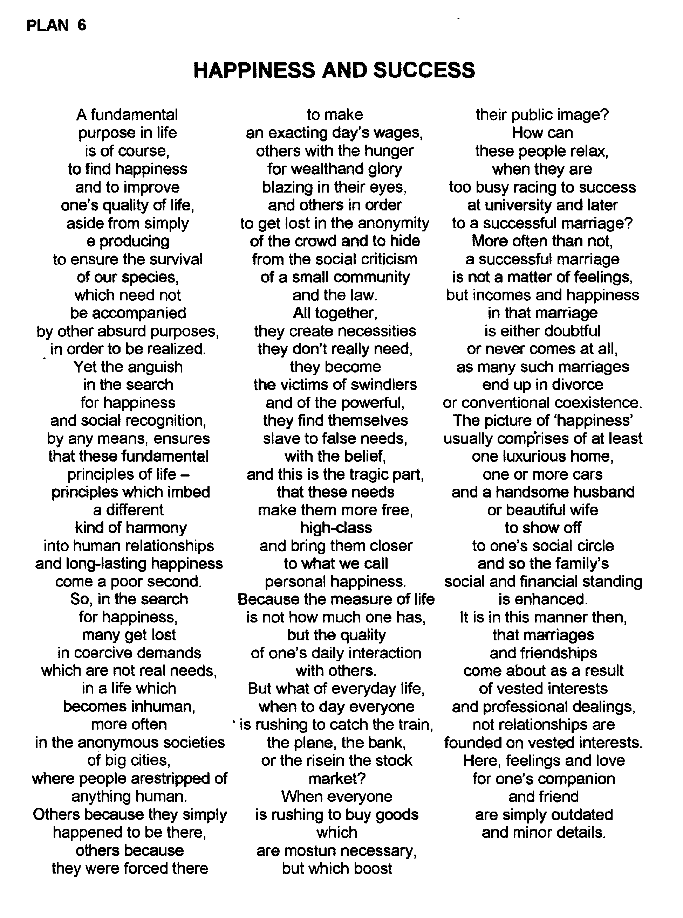

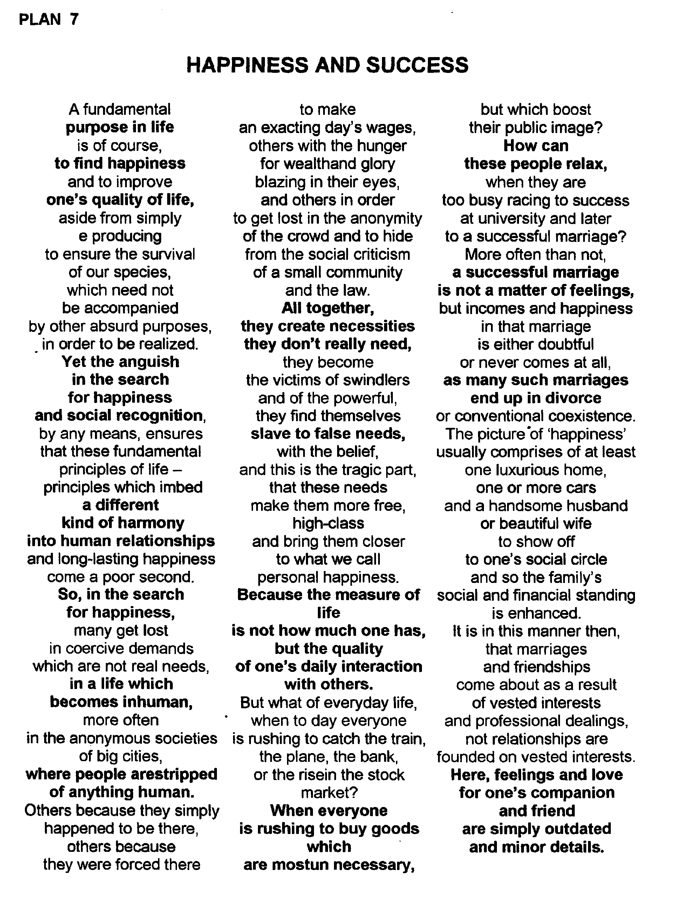

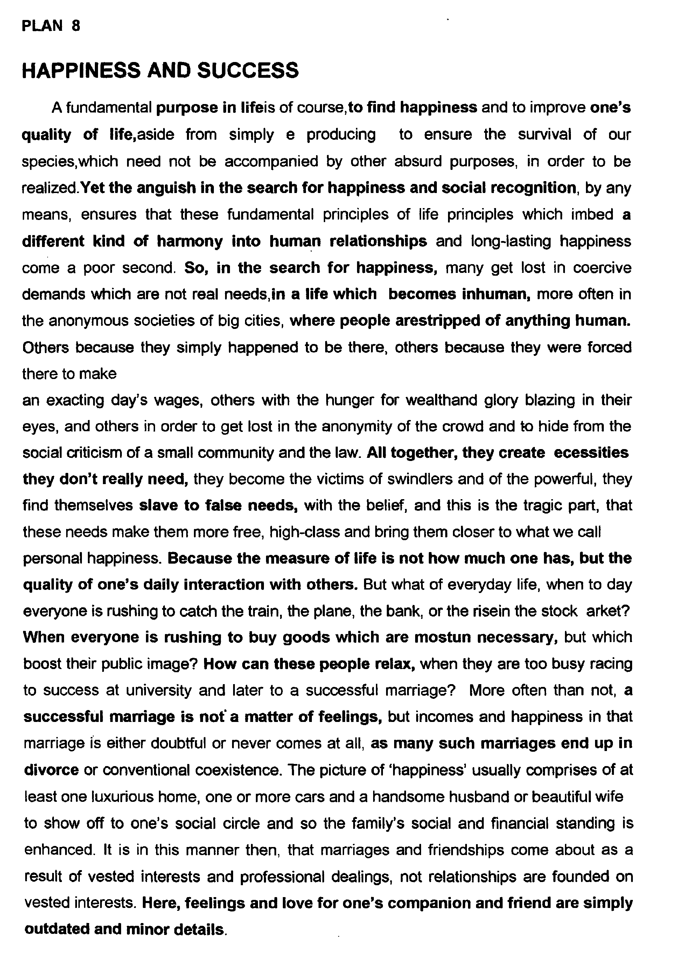

an increase in the resistanc etemperature means printed in bold, can be found in the columns of the 1st model in figure 2a of plan 2 and in plan 7. The partial, as well as the autonomous, concepts make it much easier to comprehend the whole text.

With regards to the area which is occupied by the texts printed in columns, as in the texts reformed into columns in figure 1b of the model and figure 1a, and the texts also reformed into columns in plans 4, 5, 6 and 7 in the 2nd model, we can observe that each one is spread over approximately the same area of the page as that which was occupied by the texts in their traditional form, with small spacing for the texts in columns.

Dividing texts into columns is easy to do using the programs available on computers.

The method proposed herein of producing easier comprehensible and faster readable texts overcomes many of the fundamental disadvantages of traditional script, such as the strain on the reader's eyes and the brain, the low speed at which the texts are read, the difficulty encountered by the reader in fully understanding the texts. Furthermore, this method has advantages hich are lacking in traditional texts. The advantages are outlined in more detail below

1. **The reader is relieved of the strain on his eye muscles,** which he would normally be subjected to in order to be able to see clearly while reading word by word. Here, due to the short length of the lines in the columns, the distance of the words from the reader's eyes does not change dramatically and so the lenses of the eyes do not need to adjust as mentioned above (figure 1 b in plan 1 and figure 2a in plan 2 and plans 4, 5, 6 and 7).

2. **There is reduced strain on the reader's brain** and it is relieved of sending so many commands. In line with the above paragraph, the adjustments made by the lenses of the eyes are no longer necessary, therefore the brain need not be occupied sending commands.

3. **The text is read at a greater speed**, as, in line with the above paragraphs, the procedure involved in reading the texts is now streamlined.

4. **Reading is made easier, faster and more comfortable when the text is in columns, as the total distance the reader has to skim is greatly reduced.**

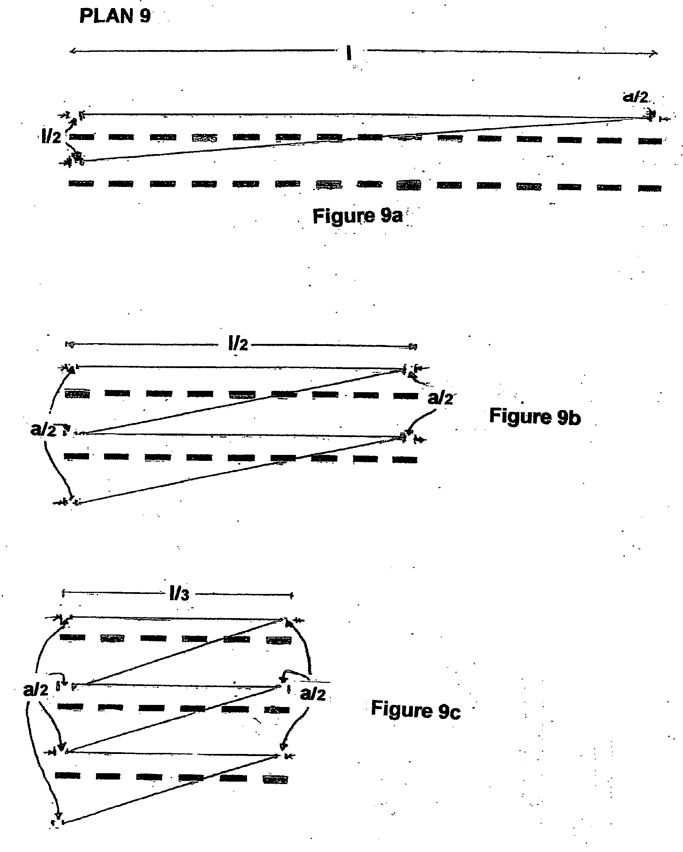

In figure 9a of plan 9, we can see a line of text, which takes up the whole width of the page, aside from its margins, and its length is equal to **l**. Normally, in order for this line to be read, the reader has to begin by focusing on the middle of the first word and finish by focusing on the middle of the last word and then return to the middle of the first word of the next line, to prepare to read that line. Therefore, this distance is equal to

$$-a/2 + l - a/2 - a/2 + l - a/2 = 2l - 2a$$

If we divide this line into two equal parts, we end up with the text in figure **9b**, which comprises of two equal lines. The length of each is equal to **l/2** and in order for this text to be read, according to the above, the reader must skim over a distance equal to:

$$4[-a/2 + l/2 - a/2] = 2l - 4a$$

Therefore, the reader will skim over a distance, which is shortened in comparison with the distance of the first line, by the length of two words. If we divide this line into three equal parts, we end up with the text in figure **9c**, which comprises of three equal lines.

The length of each of these lines is equal to **l/3**. In order for this text to be read, according to the above, the reader must skim over a distance equal to:

$$6[-a/2 + l/3 - a/2] = 2l - 6a:$$

Therefore, the reader will skim over a distance, which is shortened in comparison with the distance of the first line by 4a, i.e. by the total length of four words.

We can conclude that if, for example, we take the first line of the 1st model [draft 1], which has 11 words, and divide it into 2 lines, the distance that the reader has to skim is reduced by 2/11 = 18.8%.

If the same line of the 1st model is divided into three lines, then the distance that the reader has to skim is reduced by 4/11 = 36.36%.

5. **The text is made easier to comprehend**, as, according to paragraphs 1 and 2 above, the reader's brain is relieved of the strain and has more time to devote to comprehending the text, rather than sending commands to the lenses of the eyes to make adjustments.

6. **The text is also made easier to comprehend** by dividing the phrases of the text into lines in each column so that each of hese lines represents a partial or complete concept. Therefore, comprehending the whole text is limited only to the composition of these lines, as in figure 1 b of plan 1, figure 2a of plan 2 and plans 4,5,6and7.

7. **The speed at which the text is read is increased and is read much more comfortably** when it is laid out in columns because the length of the lines is small and included in the active part of the reader's optical field. It has been observed, after coming accustomed to such texts, that the reader skims the column virtually in a straight line from the top to the bottom, with only small deviations left and right. This develops over time and with more practice, whereby the reader then skims the text in almost a straight line and the text is read faster and more comfortably. This result can be achieved sooner by reading the texts in columns as in the models of plans 6 and 7, in which the first and last letter in each line forms a vertically symmetrical axis and this axis follows the reader's glance as he reads these lines.

8. **Any type of text can be summarized in this way as one** reads selected parts thereof. These parts comprise of single words and sets of successive words of the text, which are selected in such a way as to give a summary of the gist of the text. They are also printed using a different font or color, or in any other way, so as to stand out from the other words of the text and can be easily read. The summaries of the texts laid out in columns as in figure 2a of plan 2 and plan 7 can be easily read as the letters of the selected words and phrases are printed in bold. The summaries of traditional texts in figure 2b of plan 2 and plan 8 can be just as easily read. 5 These summaries can be of use to younger and older students and, in general, to all those who wish to have or to memorize key or brief elements of a text printed using the traditional script or that proposed herein.

**Claims**

1. Method of producing easier comprehensible , faster readable and more relaxed texts, **characterized in that** the texts are arranged in a columnar notional mode comprising apportionment of the phases contained in the original text in sets comprising one or more consecutive words, said sets of words constituting in themselves self-sufficient or partial notional entities, such as small clauses, the subject of a clause with one or more adjectival complements, the object of a clause with one or more adjectival complements, the verb with one or more adverbs thereof, individual words that must be emphasized, said sets of words being contained in consecutive lines of text in the order in which they appear in the phrase out of which they originated and in which order they are being read, said sets of words thereby forming columns and the corresponding texts produced by this method by means of equipment of any kind whatsoever, such as printing devices, electronic devices, projector devices.

2. Method of producing texts according to claim 1, **characterized by** that each line in each column comprises as small a number of words as possible so that the overall distance covered by the eyes of the reader during reading of the entire text may be as short as possible.

3. Method of producing texts according to claims 1 and 2, **characterized by** that all beginnings of lines in each column lie along a straight line that is normally oriented to the common direction of these lines.

4. Method of producing texts according to claims 1 and 2, **characterized by** that all ends of lines in each column lie along a straight line that is normally oriented to the common direction of these lines.

5. Method of producing texts according to claims 1 and 2, **characterized by** that all geometrical means of lines in each column lie along a straight line that is normally oriented to the common direction of these lines and constitutes an axis of symmetry thereof, wherein said straight line, following a certain habituation of the reader in the reading of texts of this form, may comprise the linear course along which the eyes of the reader move during reading of this column without deviating either to the right or to the left for more relaxed reading.

6. Method of producing texts according to claims 1, 2, 3, 4 and 5, as well as of texts of any other form whatsoever, **characterized by** that selected words and sets of consecutive words of the text are chosen in a manner such that if they are selectively read in the order that they appear in the text they render a broad

**EP 1 727 052 A1**

or abbreviated summary of the text, wherein, with a scope of facilitating their selective reading, said selected words and sets of consecutive words are written in letters of another font or in ink of another colour or are printed in any other manner so as to differentiate from other words in the text.

7. Texts produced in accordance with the method claimed in above claims 1-6.

**PLAN 1**

## 1st MODEL
### CONVERTING ELECTRIC ENERGY INTO THERMAL ENERGY

All conductors heat up when an electric current passes through them. When a common light bulb is switched on for an extended period of time, it heats up. When we turn on a kitchen stove, its hotplate heats up. Heaters, stoves and water-heaters heat up when an electric current passes through the elements they contain. In general, when an electric current passes through an element, its temperature rises. This phenomenon was first studied by the English physicist, James Joule, and that is why it is called "Joule's law". As we saw in Year 8 physics, an increase in the element's temperature means an increase in its thermal energy. If the element is in an environment with a lower temperature, heat from the element will be radiated to that environment. Where does this heat come from? We know that heat is a form of energy which is transferred from one body to another due to the difference in temperature. We also know that energy is not generated from nil. It can only be converted from one form into another, so that its total amount remains unaltered. However, empirical evidence suggests that when an electric current passes through an element, its thermal energy increases. Therefore, we must accept that this thermal energy comes from the electric current.

**FIGURE 1a**

### CONVERTING ELECTRIC ENERGY INTO THERMAL ENERGY

All conductors heat up when
an electric current passes through them.
When a common light bulbis switched on
for an extended period of time,
it heats up.
When we turn on a kitchen stove,
its hotplate heats up.
Heaters, stoves and water-heaters heat up
when an electric current passes
through the resistance they contain.
In general, when an electric current
passes through an resistance ,
its temperature rises.
This phenomenon was first studied
by the English physicist, James Joule
and that is why it is called "Joule's law".
As we saw in the book of physics,
an increase in the element's temperature
means an increase in its thermal energy.
If the resistance i
s in an environment

with a lower temperature,
heat from the resistance
will be radiated to that environment.
Where does this heat come from?
We know that heat is a form of energy
which is transferred
from one body to another
due to the difference in temperature.
We also know that energy
is not generated from nil.
It can only be converted
from one form into another,
so that its total amount remains unaltered.
However, empirical evidence suggests
that when an electric current passes
through an resistance,
its thermal energy increases.
Therefore, we must accept that
this thermal energy comes
from the electric current

**FIGURE 1 b**

## PLAN 2

### CONVERTING ELECTRIC ENERGY INTO THERMAL ENERGY

**All conductors heat up when
an electric current
passes through them.**
When a common light bulbis switched on
for an extended period of time,
it heats up.
**When we turn on a kitchen stove,
its hotplate heats up.**
Heaters, stoves and water-heaters heat up
when an electric current passes
through the resistance they contain.
**In general, when an electric current
passes through an resistance ,
its temperature rises.**
This phenomenon was first studied
by the English physicist, James Joule
and that is why it is called "Joule's law".
As we saw in the book of physics,
**an increase in the resistanc
etemperature means
an increase in its thermal energy.**

**If the resistance is in an environment
with a lower temperature,
heat from the resistance
will be radiated to that environment.**
Where does this heat come from?
We know that heat is a form of energy
which is transferred
from one body to another
due to the difference in temperature.
**We also know that energy
is not generated from nil.**
It can only be converted
from one form into another,
so that its total amount remains unaltered.
However, empirical evidence suggests
**that when an electric current passes
through a resistance,
its thermal energy increases.**
Therefore, we must accept that
this thermal energy comes
from the electric current

**FIGURE 2a**

### CONVERTING ELECTRIC ENERGY INTO THERMAL ENERGY

**All conductors heat up when an electric current passes through them.** When a common light bulbis switched on for an extended period of time, it heats up. **When we turn on a kitchen stove, its hotplate heats up.** Heaters, stoves and water-heaters heat up when an electric current passes through the resistance they contain. **In general, when an electric current passes through an resistance , its temperature rises.** This phenomenon was first studied by the English physicist, James Joule and that is why it is called "Joule's law". As we saw in the book of physics,**an increase in the resistanc etemperature means an increase in its thermal energy.If the resistance is in an environment with a lower temperature, heat from the resistance will be radiated to that environment.** Where does this heat come from? We know that heat is a form of energy which is transferred from one body to another due to the difference in temperature.**We also know that energy is not generated from nil.** It can only be converted from one form into another, so that its total amount remains unaltered. However, empirical evidence suggests **that when an electric current passes through a resistance,its thermal energy increases.**Therefore, we must accept that this thermal energy comes from the electric current

**FIGURE 2 b**

**PLAN 3**

<div align="center">

**2o MODEL**

</div>

## *Happiness and success*

A fundamental purpose in life is, of course, to find happiness and to improve one's quality of life, aside from simply reproducing to ensure the survival of our species, which need not be accompanied by other absurd purposes, in order to be realized. Yet, the anguish in the search for happiness and social recognition, by any means, ensures that these fundamental principles of life – principles which imbed a different kind of harmony into human relationships and long-lasting happiness – come a poor second. So, in the search for happiness, many get lost in coercive demands which are not real needs, in a life which becomes inhuman, more often in the anonymous societies of big cities, where people are stripped of anything human. Others because they simply happened to be there, others because they were forced there to make an exacting day's wages, others with the hunger for wealth and glory blazing in their eyes, and others in order to get lost in the anonymity of the crowd and to hide from the social criticism of a small community and the law. All together, they create necessities they don't really need, they become the victims of swindlers and of the powerful, they find themselves slave to false needs, with the belief, and this is the tragic part, that these needs make them more free, high-class and bring them closer to what we call personal happiness. Because the measure of life is not how much one has, but the quality of one's daily interaction with others. But what of everyday life, when today everyone is rushing to catch the train, plane, bank, or the rise in the stock market? When everyone is rushing to buy goods which are most unnecessary, but which boost their public image? How can these people relax, when they are too busy racing to success at university and later to a successful marriage? More often than not, a successful marriage is not a matter of feelings, but incomes, and happiness in that marriage is either doubtful or never comes at all, as many such marriages end up in divorce or conventional co-existence. The picture of 'happiness' usually comprises of at least one luxurious home, one or more cars and a handsome husband or beautiful wife to show off to one's social circle and so the family's social and financial standing is enhanced. It is in this manner, then, that marriages and friendships come about as a result of vested interests and professional dealings, not relationships, are founded on vested interests. Here, feelings and love for one's companion and friend are simply outdated and minor details.

*PLAN 4*

# HAPPINESS AND SUCCESS

A fundamental
purpose in life
is of course,
to find happiness
and to improve
one's quality of life,
aside from simply
e producing
to ensure the survival
of our species,
which need not
be accompanied
by other absurd purposes,
in order to be realized.
Yet, the anguish
in the search
for happiness
and social recognition,
by any means, ensures
that these fundamental
principles of life – principles
which imbed
a different kind of harmony
into human relationships
and long-lasting happiness
come a poor second.
So, in the search
for happiness,
many get lost
in coercive demands
which are not real needs,
in a life which
becomes inhuman,
more often
in the anonymous societies
of big cities,
where people are
stripped of anything human.
Others because they simply
happened to be there,
others because
they were forced there

to make
an exacting day's wages,
others with the hunger
for wealth
and glory blazing in their eyes,
and others in order
to get lost in the anonymity
of the crowd and to hide
from the social criticism
of a small community
and the law.
All together,
they create necessities
they don't really need,
they become
the victims of swindlers
and of the powerful,
they find themselves
slave to false needs,
with the belief,
and this is the tragic part,
that these needs
make them more free,
high-class
and bring them closer
to what we call
personal happiness. Because
the measure of life
is not how much one has,
but the quality
of one's daily interaction
with others.
· But what of everyday life,
when to day everyone
is rushing to catch the train,
the plane, the bank,
or the risein the stock market?
When everyone
is rushing to buy goods which
are mostun necessary,
but which boost
their public image?

How can
these people relax,
when they are
too busy racing to success
at university and later
to a successful marriage?
More often than not,
a successful marriage
is not a matter of feelings,
but incomes and happiness
in that marriage
is either doubtful
or never comes at all,
as many such marriages
end up in divorce
or conventional coexistence.
The picture of 'happiness'
usually comprises of
at least one luxurious home,
one or more cars
and a handsome husband
or beautiful wife
to show off
to one's social circle
and so the family's
social and financial standing
is enhanced.
It is in this manner then,
that marriages
and friendships
come about as a result
of vested interests
and professional dealings,
not relationships are founded
on vested interests.
Here, feelings and love
for one's companion
and friend
are simply outdated
and minor details.

*PLAN 5*

# HAPPINESS AND SUCCESS

A fundamental purpose in life is of course, to find happiness and to improve one's quality of life, aside from simply e producing to ensure the survival of our species, which need not be accompanied by other absurd purposes, in order to be realized. Yet, the anguish in the search for happiness and social recognition, by any means, ensures that these fundamental principles of life – principles which imbed a different kind of harmony into human relationships and long-lasting happiness come a poor second. So, in the search for happiness, many get lost in coercive demands which are not real needs, in a life which becomes inhuman, more often in the anonymous societies of big cities, where people are stripped of anything human. Others because they simply happened to be there, others because they were forced there to make an exacting day's wages, others with the hunger for wealth and glory blazing in their eyes, and others in order to get lost in the anonymity of the crowd and to hide from the social criticism of a small community and the law. All together, they create necessities they don't really need, they become the victims of swindlers and of the powerful, they find themselves slave to false needs, with the belief, and this is the tragic part, that these needs make them more free, high-class and bring them closer to what we call personal happiness. Because the measure of life is not how much one has, but the quality of one's daily interaction with others. But what of everyday life, when to day everyone is rushing to catch the train, the plane, the bank, or the risein the stock market? When everyone is rushing to buy goods which are mostun necessary, but which boost their public image?

How can these people relax, when they are too busy racing to success at university and later to a successful marriage? More often than not, a successful marriage is not a matter of feelings, but incomes and happiness in that marriage is either doubtful or never comes at all, as many such marriages end up in divorce or conventional coexistence. The picture of 'happiness' usually comprises of at least one luxurious home, one or more cars and a handsome husband or beautiful wife to show off to one's social circle and so the family's social and financial standing is enhanced. It is in this manner then, that marriages and friendships come about as a result of vested interests and professional dealings, not relationships are founded on vested interests. Here, feelings and love for one's companion and friend are simply outdated and minor details.

PLAN 6

# HAPPINESS AND SUCCESS

A fundamental
purpose in life
is of course,
to find happiness
and to improve
one's quality of life,
aside from simply
e producing
to ensure the survival
of our species,
which need not
be accompanied
by other absurd purposes,
in order to be realized.
Yet the anguish
in the search
for happiness
and social recognition,
by any means, ensures
that these fundamental
principles of life –
principles which imbed
a different
kind of harmony
into human relationships
and long-lasting happiness
come a poor second.
So, in the search
for happiness,
many get lost
in coercive demands
which are not real needs,
in a life which
becomes inhuman,
more often
in the anonymous societies
of big cities,
where people arestripped of
anything human.
Others because they simply
happened to be there,
others because
they were forced there

to make
an exacting day's wages,
others with the hunger
for wealthand glory
blazing in their eyes,
and others in order
to get lost in the anonymity
of the crowd and to hide
from the social criticism
of a small community
and the law.
All together,
they create necessities
they don't really need,
they become
the victims of swindlers
and of the powerful,
they find themselves
slave to false needs,
with the belief,
and this is the tragic part,
that these needs
make them more free,
high-class
and bring them closer
to what we call
personal happiness.
Because the measure of life
is not how much one has,
but the quality
of one's daily interaction
with others.
But what of everyday life,
when to day everyone
is rushing to catch the train,
the plane, the bank,
or the risein the stock
market?
When everyone
is rushing to buy goods
which
are mostun necessary,
but which boost

their public image?
How can
these people relax,
when they are
too busy racing to success
at university and later
to a successful marriage?
More often than not,
a successful marriage
is not a matter of feelings,
but incomes and happiness
in that marriage
is either doubtful
or never comes at all,
as many such marriages
end up in divorce
or conventional coexistence.
The picture of 'happiness'
usually comprises of at least
one luxurious home,
one or more cars
and a handsome husband
or beautiful wife
to show off
to one's social circle
and so the family's
social and financial standing
is enhanced.
It is in this manner then,
that marriages
and friendships
come about as a result
of vested interests
and professional dealings,
not relationships are
founded on vested interests.
Here, feelings and love
for one's companion
and friend
are simply outdated
and minor details.

PLAN 7

# HAPPINESS AND SUCCESS

A fundamental
**purpose in life**
is of course,
**to find happiness**
and to improve
**one's quality of life,**
aside from simply
e producing
to ensure the survival
of our species,
which need not
be accompanied
by other absurd purposes,
in order to be realized.
**Yet the anguish**
**in the search**
**for happiness**
**and social recognition,**
by any means, ensures
that these fundamental
principles of life –
principles which imbed
**a different**
**kind of harmony**
**into human relationships**
and long-lasting happiness
come a poor second.
**So, in the search**
**for happiness,**
many get lost
in coercive demands
which are not real needs,
**in a life which**
**becomes inhuman,**
more often
in the anonymous societies
of big cities,
**where people arestripped**
**of anything human.**
Others because they simply
happened to be there,
others because
they were forced there

to make
an exacting day's wages,
others with the hunger
for wealthand glory
blazing in their eyes,
and others in order
to get lost in the anonymity
of the crowd and to hide
from the social criticism
of a small community
and the law.
**All together,**
**they create necessities**
**they don't really need,**
they become
the victims of swindlers
and of the powerful,
they find themselves
**slave to false needs,**
with the belief,
and this is the tragic part,
that these needs
make them more free,
high-class
and bring them closer
to what we call
personal happiness.
**Because the measure of**
**life**
**is not how much one has,**
**but the quality**
**of one's daily interaction**
**with others.**
But what of everyday life,
when to day everyone
is rushing to catch the train,
the plane, the bank,
or the risein the stock
market?
**When everyone**
**is rushing to buy goods**
**which**
**are mostun necessary,**

but which boost
their public image?
**How can**
**these people relax,**
when they are
too busy racing to success
at university and later
to a successful marriage?
More often than not,
**a successful marriage**
**is not a matter of feelings,**
but incomes and happiness
in that marriage
is either doubtful
or never comes at all,
**as many such marriages**
**end up in divorce**
or conventional coexistence.
The picture of 'happiness'
usually comprises of at least
one luxurious home,
one or more cars
and a handsome husband
or beautiful wife
to show off
to one's social circle
and so the family's
social and financial standing
is enhanced.
It is in this manner then,
that marriages
and friendships
come about as a result
of vested interests
and professional dealings,
not relationships are
founded on vested interests.
**Here, feelings and love**
**for one's companion**
**and friend**
**are simply outdated**
**and minor details.**

PLAN 8

# HAPPINESS AND SUCCESS

A fundamental **purpose in life**is of course,**to find happiness** and to improve **one's quality of life,**aside from simply e producing to ensure the survival of our species,which need not be accompanied by other absurd purposes, in order to be realized.**Yet the anguish in the search for happiness and social recognition**, by any means, ensures that these fundamental principles of life principles which imbed **a different kind of harmony into human relationships** and long-lasting happiness come a poor second. **So, in the search for happiness,** many get lost in coercive demands which are not real needs,**in a life which becomes inhuman,** more often in the anonymous societies of big cities, **where people arestripped of anything human.** Others because they simply happened to be there, others because they were forced there to make

an exacting day's wages, others with the hunger for wealthand glory blazing in their eyes, and others in order to get lost in the anonymity of the crowd and to hide from the social criticism of a small community and the law. **All together, they create ecessities they don't really need,** they become the victims of swindlers and of the powerful, they find themselves **slave to false needs,** with the belief, and this is the tragic part, that these needs make them more free, high-class and bring them closer to what we call personal happiness. **Because the measure of life is not how much one has, but the quality of one's daily interaction with others.** But what of everyday life, when to day everyone is rushing to catch the train, the plane, the bank, or the risein the stock arket? **When everyone is rushing to buy goods which are mostun necessary,** but which boost their public image? **How can these people relax,** when they are too busy racing to success at university and later to a successful marriage? More often than not, **a successful marriage is not a matter of feelings,** but incomes and happiness in that marriage is either doubtful or never comes at all, **as many such marriages end up in divorce** or conventional coexistence. The picture of 'happiness' usually comprises of at least one luxurious home, one or more cars and a handsome husband or beautiful wife to show off to one's social circle and so the family's social and financial standing is enhanced. It is in this manner then, that marriages and friendships come about as a result of vested interests and professional dealings, not relationships are founded on vested interests. **Here, feelings and love for one's companion and friend are simply outdated and minor details**.

**PLAN 9**

Figure 9a

Figure 9b

Figure 9c

**European Patent Office**

**EUROPEAN SEARCH REPORT**

Application Number

EP 06 38 6011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GRANAAS M M: "SIMPLE, APPLIED TEXT PARSING" BEHAVIOR RESEARCH METHODS, INSTRUMENTS AND COMPUTERS, PSYCHONOMIC SOCIETY, US, vol. 17, no. 2, April 1985 (1985-04), pages 209-216, XP009065065 ISSN: 0743-3808 * page 209, right-hand column, paragraph 2 - page 210, right-hand column, paragraph 4 * | 1-7 | INV. G06F17/21 G06F17/27 |
| X | JANDREAU S M ET AL: "IMPROVING THE READABILITY OF TEXT WITH AUTOMATIC PHRASE-SENSITIVE FORMATING" BRITISH JOURNAL OF EDUCATIONAL TECHNOLOGY, BLACKWELL PUBLISHING LTD., OXFORD, GB, vol. 17, no. 2, May 1986 (1986-05), pages 128-133, XP009065082 ISSN: 0007-1013 * page 129, paragraph 2 - page 132, paragraph 3 * | 1-7 | |
| X | KRUK: "Processing Test on Monitors" VISUAL PROCESSES IN READING AND READING DISABILITIES, 1993, pages 457-471, XP002966249 * page 467, paragraph 3 - page 468, paragraph 3 * | 1-7 | TECHNICAL FIELDS SEARCHED (IPC) G06F |

-/--

The present search report has been drawn up for all claims

| Place of search | Date of completion of the search | Examiner |
|---|---|---|
| Berlin | 4 October 2006 | Abram, Robert |

EPO FORM 1503 03.82 (P04C01)

**European Patent Office**

**EUROPEAN SEARCH REPORT**

Application Number

EP 06 38 6011

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WALKER ET AL.: "Neurocognitive and classroom-based validation of computer-generated, visual-syntactic text formatting for college and high-school reading" ANNUAL MEETING OF THE AMERICAN EDUCATIONAL RESEARCH ASSOCIATION, 12 April 2004 (2004-04-12), - 16 April 2004 (2004-04-16) XP002401500 US * page 3, paragraph 3 - page 4, paragraph 2 * * page 5 * * page 9 - page 10 * ----- | 1-7 | |
| A | PATENT ABSTRACTS OF JAPAN vol. 013, no. 157 (P-857), 17 April 1989 (1989-04-17) & JP 63 314635 A (BROTHER IND LTD), 22 December 1988 (1988-12-22) * abstract * ----- | 1-7 | |
| A | "MORE READABLE TEXT BOOSTS STUDENT'S GRADES, INTEREST" INTERNET CITATION, [Online] 13 May 1991 (1991-05-13), XP002401501 Retrieved from the Internet: URL:http://www.rochester.edu/pr/releases/psy/bev.htm> [retrieved on 2006-10-01] * the whole document * ----- | 1-7 | TECHNICAL FIELDS SEARCHED (IPC) |

The present search report has been drawn up for all claims

| Place of search | Date of completion of the search | Examiner |
|---|---|---|
| Berlin | 4 October 2006 | Abram, Robert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 38 6011

This annex lists the patent family members relating to the patent documents cited in the above-mentioned European search report.
The members are as contained in the European Patent Office EDP file on
The European Patent Office is in no way liable for these particulars which are merely given for the purpose of information.

04-10-2006

| Patent document cited in search report | | Publication date | Patent family member(s) | Publication date |
|---|---|---|---|---|
| JP 63314635 | A | 22-12-1988 | NONE | |

EPO FORM P0459

For more details about this annex : see Official Journal of the European Patent Office, No. 12/82